# EUROPÄISCHE PATENTSCHRIFT

(11) **EP 3 179 156 B1**
(45) Veröffentlichungstag und Bekanntmachung des Hinweises auf die Patenterteilung: **28.07.2021**
(21) Anmeldenummer: 16201738.8
(22) Anmeldetag: 01.12.2016
(51) Int. Cl.: F21S 45/10, F21S 41/40, F21S 41/675

(54) **BELEUCHTUNGSEINRICHTUNG**
ILLUMINATION DEVICE
DISPOSITIF D'ÉCLAIRAGE

(30) Priorität: 11.12.2015 DE 102015016048
(43) Veröffentlichungstag der Anmeldung: 14.06.2017
(73) Patentinhaber: AUDI AG, 85045 Ingolstadt (DE)
(72) Erfinder: Gut, Carsten, 88662 Überlingen (DE)

(56) Entgegenhaltungen:
- EP-A2- 1 433 655
- WO-A1-2013/164276
- DE-A1- 19 530 008
- DE-A1-102014 213 636
- JP-A- 2015 064 963
- JP-A- 2015 123 855
- US-A1- 2015 160 454

## Beschreibung

Die Erfindung betrifft eine Beleuchtungseinrichtung mit einer Lichtquelle, einer Lichtaustrittsöffnung sowie einer zwischen der Lichtquelle und der Lichtaustrittsöffnung angeordneten, mittels eines Steuersignals hinsichtlich ihrer Reflexionsposition steuerbaren Reflektoreinheit, wobei die Reflektoreinheit ausgebildet ist, mittels eines Betriebssteuersignals eine Betriebsposition einzunehmen, in der von der Lichtquelle emittiertes Licht zur Lichtaustrittsöffnung umlenkbar ist. Die Erfindung betrifft ferner einen Scheinwerfer für ein Kraftfahrzeug, mit einem Scheinwerfergehäuse sowie einer elektrischen Anschlusseinheit. Weiterhin betrifft die Erfindung ein Kraftfahrzeug. Schließlich betrifft die Erfindung auch ein Verfahren zum Betreiben einer Beleuchtungseinrichtung mit einer Lichtquelle, einer Lichtaustrittsöffnung sowie einer zwischen der Lichtquelle und der Lichtaustrittsöffnung angeordneten einstellbaren Reflektoreinheit, wobei die Reflektoreinheit mittels eines Steuersignals hinsichtlich ihrer Reflexionsstellung gesteuert wird, wobei die Reflektoreinheit mittels eines Betriebssteuersignals eine Betriebsposition einnimmt, in der von der Lichtquelle emittiertes Licht zur Lichtaustrittsöffnung umgelenkt wird.

Gattungsgemäße Beleuchtungsvorrichtungen, Scheinwerfer mit derartigen Beleuchtungsvorrichtungen sowie Kraftfahrzeuge mit Scheinwerfern und Verfahren zu deren Betrieb sind dem Grunde nach bekannt, so beispielsweise aus der DE 197 37 653 A1, die eine Beleuchtungseinrichtung für Fahrzeuge und ein Betriebsverfahren für eine derartige Beleuchtungseinrichtung offenbart, der DE 101 34 594 A1, die ein Beleuchtungssystem und ein Beleuchtungsverfahren offenbart, der DE 10 2008 022 795 A1, die einen Kfz-Scheinwerfer offenbart, der DE 10 2013 226 639 A1, die das Erzeugen eines Lichtstrahlmusters in einem Fernfeld offenbart, sowie der DE 10 2014 001 201 A1, die eine Beleuchtungsvorrichtung für ein Kraftfahrzeug mit zwei Typen von Leuchteinrichtungen offenbart. In diesem Zusammenhang offenbart ferner die JP 2015-064963 A eine Fahrzeugbeleuchtungsfixierung. Schließlich offenbart die DE 10 2014 213 636 A1 eine Fahrzeugleuchte mit einem bewegbaren Abschattungselement.

Obwohl sich der Stand der Technik grundsätzlich bewährt hat, erweist es sich als nachteilig, dass bei ausgeschalteter Beleuchtungseinrichtung beziehungsweise ausgeschaltetem Scheinwerfer die Lichtquelle von außen sichtbar ist. Insbesondere wenn die Lichtquelle einen Halbleiterlaser umfasst, der zur Erzeugung des gewünschten Lichts mit einer Konversionseinheit zusammenwirkt, die ein Konversionselement aufweist, kann ein Konversionsstoff des Konversionselements nach außen sichtbar sein. Ist der Konversionsstoff des Konversionselements durch Phosphor gebildet, erscheint die Beleuchtungseinrichtung beziehungsweise der Scheinwerfer von außen derart, dass ein gelbliches Durchschimmern erkennbar ist. Dies wird als störend empfunden. Darüber hinaus kann durch von außen durch die Lichtaustrittsöffnung eintretendes Licht, insbesondere Sonnenlicht, eine Alterung von Bauelementen der Beleuchtungseinrichtung beziehungsweise des Scheinwerfers verstärkt werden, besonders wenn die Beleuchtungseinrichtung eine Konversionseinheit umfasst.

Es ist deshalb die Aufgabe der Erfindung, bei einer gattungsgemäße Beleuchtungseinrichtung, einem Verfahren zu deren Betrieb, einem Scheinwerfer sowie einem Kraftfahrzeug unerwünschte Wirkungen aufgrund von durch die Lichtaustrittsfläche von außen eintretendes Licht zu reduzieren.

Als Lösung wird mit der Erfindung eine Beleuchtungseinrichtung nach Anspruch 1 vorgeschlagen. Mit den weiteren Ansprüchen 7, 8 und 9 werden jeweils ein Scheinwerfer, ein Kraftfahrzeug sowie ein Verfahren zum Betreiben der Beleuchtungseinrichtung vorgeschlagen.

Weitere vorteilhafte Ausgestaltungen der Erfindung ergeben sich anhand von Merkmalen der abhängigen Ansprüche.

Mit der Erfindung wird insbesondere bei einer gattungsgemäßen Beleuchtungseinrichtung vorgeschlagen, dass ein Absorberelement vorgesehen ist, welches ausgebildet ist, empfangenes Licht zu absorbieren, wobei die Reflektoreinheit ausgebildet ist, mittels eines Absorbersignals eine Absorberposition einzunehmen, in der das von der Lichtquelle emittierte Licht und/oder von außen durch die Lichtaustrittsöffnung in die Beleuchtungseinrichtung eintretendes Licht zum Absorber umlenkbar ist.

Mit der Erfindung wird weiterhin insbesondere vorgeschlagen, dass ein gattungsgemäßer Scheinwerfer eine Beleuchtungseinrichtung der Erfindung umfasst.

Weiterhin wird insbesondere vorgeschlagen, dass ein gattungsgemäßes Kraftfahrzeug einen Scheinwerfer gemäß der Erfindung umfasst.

Schließlich wird mit der Erfindung bei einem gattungsgemäßen Verfahren insbesondere vorgeschlagen, dass die Reflektoreinheit mittels eines Absorbersignals eine Absorberposition einnimmt, in der das von der Lichtquelle emittierte Licht und/oder von außen durch die Lichtaustrittsöffnung in die Beleuchtungseinrichtung eintretendes Licht zu einem Absorberelement umgelenkt wird, welches empfangenes Licht absorbiert.

Die Erfindung nutzt die in der Regel in der Beleuchtungseinrichtung ohnehin vorhandene Reflektoreinheit, um vorteilhaft darauf einzuwirken, einen Strahlengang zwischen der Lichtaustrittsöffnung und der Lichtquelle im ausgeschalteten Zustand der Beleuchtungseinrichtung zu unterbrechen. Dabei wird mit dem Absorberelement sichergestellt, dass unerwünschte Lichtstrahlung durch eine Umlenkung beziehungsweise Reflexion innerhalb der Beleuchtungseinrichtung keinen weiteren unerwünschten Effekt hervorrufen kann, weil diese Strahlung im Absorberelement absorbiert wird. Erfindungsgemäß ist es vorgesehen, dass das Absorberelement ausschließlich einen Absorberbereich des Gehäuses der Beleuchtungseinrichtung (beziehungsweise des Scheinwerfers), der geschwärzt ist, aufweist.

Die Lichtquelle ist vorzugsweise eine elektrische Lichtquelle, die beispielsweise einen Laser, insbesondere einen Halbleiterlaser, eine Leuchtdiode, insbesondere eine Matrixanordnung von einer Mehrzahl von Leuchtdioden, eine Xenon-Lampe und/oder dergleichen umfassen kann. Die Lichtaustrittsöffnung ist eine Öffnung, die durch die Beleuchtungseinrichtung bereitgestellt wird, und die dem Austritt des durch die Lichtquelle bereitgestellten Lichts im eingeschalteten Zustand der Beleuchtungseinrichtung dient. Die Lichtaustrittsöffnung kann beispielsweise durch ein Gehäuse oder dergleichen gebildet sein. Darüber hinaus kann die Lichtaustrittsöffnung auch durch einen für das zu emittierende Licht transparenten Werkstoff gebildet sein, um die Beleuchtungseinrichtung, beispielsweise ein Gehäuse der Beleuchtungseinrichtung, gegen äußere Einwirkungen zu schützen.

Die Beleuchtungseinrichtung umfasst ferner die Reflektoreinheit, die mittels des Steuersignals hinsichtlich ihrer Reflexionsposition steuerbar ist. Dadurch ist es möglich, Beleuchtungseigenschaften der Beleuchtungseinrichtung bei eingeschalteter Beleuchtungseinrichtung in gewünschter Weise einstellen zu können. Die Reflektoreinheit kann beispielsweise durch einen einstellbaren Spiegel gebildet sein, der mittels eines Antriebs in seiner Stellung, insbesondere einer Schwenkstellung, einstellbar ausgebildet ist. Das Steuersignal kann durch eine Steuereinheit bereitgestellt werden, die durch die Beleuchtungseinrichtung selbst umfasst ist. Darüber hinaus besteht natürlich die Möglichkeit, die Steuereinheit zumindest teilweise oder auch vollständig durch eine zentrale Steuereinheit zu realisieren, beispielsweise eine Scheinwerfersteuerung, eine Kraftfahrzeugsteuerung oder dergleichen. Dadurch kann beispielsweise bei einem Scheinwerfer für ein Kraftfahrzeug mittels der Reflektoreinheit zwischen "Fernlicht" und "Abblendlicht" umgeschaltet werden. Die Betriebsposition ist demnach eine Position, mit der optisch eine Verbindung zwischen der Lichtquelle und der Lichtaustrittsöffnung hergestellt ist. Entsprechend wird als Steuersignal ein Betriebssteuersignal durch die Steuereinheit bereitgestellt, mittels dem bei der Reflektoreinheit die gewünschte Reflexionsposition als Betriebsposition eingestellt werden kann. In dieser Betriebsposition ist das von der Lichtquelle emittierte Licht zur Lichtaustrittsöffnung umlenkbar, so dass die gewünschte Beleutungskulisse erzeugt werden kann.

Davon unterscheidet sich die Absorberposition, bei der gerade eine optische Verbindung zwischen der Lichtquelle und der Lichtaustrittsöffnung vermieden ist beziehungsweise unterbrochen ist. Dies wird dadurch erreicht, indem die Reflektoreinheit hinsichtlich ihrer Reflexionsposition derart eingestellt wird, dass von der Lichtquelle emittiertes Licht nicht zur Lichtaustrittsöffnung gelangen würde, sofern die Lichtquelle eingeschaltet wäre. Dadurch kann zugleich erreicht werden, dass auch von außen durch die Lichtaustrittsöffnung eintretendes Licht, beispielsweise Sonnenlicht, nicht bis zur Lichtquelle zu gelangen vermag. Durch die Reflektoreinheit kann in der Absorberposition von außen eintretendes Licht in das Absorberelement umgelenkt. Dadurch ist zugleich auch gewährleistet, dass die Lichtquelle und mit ihr zusammenwirkende Einheiten beziehungsweise Elemente, die zwischen der Lichtquelle und der Reflektoreinheit angeordnet sind, von außen nicht mehr sichtbar sind. Von außen eintretendes Licht kann somit nicht mehr auf die zwischen der Reflektoreinheit und der Lichtquelle einschließlich einwirkende Elemente beziehungsweise Einheiten einwirken.

Es ist ferner vorgesehen, dass die Reflektoreinheit ausgebildet ist, die Absorberposition bei deaktivierter Lichtquelle automatisch einzunehmen. Das Einnehmen der Absorberposition kann dabei aktiv oder auch passiv vorgesehen sein. So kann vorgesehen sein, dass die Reflektoreinheit aufgrund eines Abschaltsignals für die Lichtquelle entsprechend angesteuert und die Reflektoreinheit aktiv, beispielsweise mittels eines Antriebs, in die Absorberposition verfahren wird. Die Reflektoreinheit wird somit bei ausgeschalteter Lichtquelle noch mit Energie versorgt, um die gewünschte Einstellung vornehmen zu können. Es kann aber auch vorgesehen sein, dass die Reflektoreinheit zusammen mit der Lichtquelle abgeschaltet wird, woraufhin die Reflektoreinheit dann automatisch die Absorberposition passiv einnimmt.

Beispielsweise kann vorgesehen sein, dass die Reflektoreinheit ausgebildet ist, mittels einer Antriebseinheit in die Absorberposition verfahren zu werden. Diese Ausgestaltung realisiert also eine aktive Einnahme der Absorberposition. So kann vorgesehen sein, dass die Antriebseinheit über eine separate Energieversorgung verfügt oder erst nach Einnahme der Absorberposition durch die Reflektoreinheit automatisch abgeschaltet wird. Dadurch kann bei Abschalten der Lichtquelle sichergestellt werden, dass die Reflektoreinheit mittels der Antriebseinheit in die Absorberposition verfahren werden kann. Die Antriebseinheit kann zu diesem Zweck beispielsweise eine elektromotorische Antriebseinheit sein, die beispielsweise auf kapazitiver oder auch auf induktiver Basis funktioniert.

Darüber hinaus kann die Reflektoreinheit zum Einnehmen der Absorberposition auch elastisch vorgespannt sein. In diesem Fall ist eine separate Antriebseinheit nicht erforderlich, weil die Reflektoreinheit passiv zum Einnehmen der Absorberposition angetrieben wird. Beispielsweise kann dies durch elastische Elemente, beispielsweise Federelemente oder dergleichen, realisiert sein. In diesem Fall ist es ferner möglich, die Reflektoreinheit zusammen mit der Lichtquelle abzuschalten, wobei dann aufgrund der nicht mehr verfügbaren Energie für das Einnehmen der Betriebsposition ein automatisches Einnehmen der Absorberposition durch die elastische Vorspannung erreicht werden kann.

Gemäß einer weiteren Ausgestaltung wird vorgeschlagen, dass die Reflektoreinheit eine Mehrzahl von einstellbaren Reflektorelementen aufweist, die mittels des Steuersignals individuell einstellbar sind. Die Reflektoreinheit kann in dieser Ausgestaltung beispielsweise als Digital Micromirror Device (DMD) realisiert sein. Bei einem DMD handelt es sich beispielsweise um einen Spatial Light Modulator (SLM, zu Deutsch: Flächenmodulator). Dieses besteht aus matrixförmig angeordneten Mikrospiegelaktoren, das heißt, dass die einzelnen Mikrospiegel schwenkbar angeordnet sind. Hierzu sind sie beispielsweise mittels eines Piezoantriebs antreibbar. Eine Längenabmessung eines Mikrospiegels kann beispielsweise im Bereich von 15 Mikrometer liegen. Jeder Mikrospiegel lässt sich in seinem Winkel einzeln verstellen. Vorzugsweise sind zwei stabile Endzustände vorgesehen, zwischen denen der Spiegel eingestellt werden kann. Auf diese Weise kann mittels der Reflektoreinheit zugleich auch eine Beleuchtungseinrichtung nach Art eines Pixelscheinwerfers realisiert sein. Besonders vorteilhaft lässt sich das DMD mit Punktlichtquellen, beispielsweise einem Laser, insbesondere einem Halbleiterlaser, oder auch einer LED (Leuchtdiode) kombinieren. Vorzugsweise ist vorgesehen, dass die einzelnen Reflektorelemente, bei einem DMD die Mikrospiegel, jeweils im ausgeschalteten Zustand der Lichtquelle derart verfahren werden, dass eine Umlenkung von Licht zum Absorber erfolgt.

Weiterhin wird vorgeschlagen, dass die Lichtquelle einen Laser, eine SLD oder eine Leuchtdiode aufweist. Bei diesen Lichtquellen handelt es sich um Lichtquellen, die hochkonzentriertes Licht in einem stark gebündelten Lichtstrahl bereitstellen können und besonders mit dem Reflektor, insbesondere wenn er als Reflektoreinheit mit einer Mehrzahl von einstellbaren Reflektorelementen wie einem DMD ausgebildet ist, zusammenwirken können. Natürlich können darüber hinaus weitere optische Elemente, beispielsweise Linsen, weitere Spiegel oder dergleichen vorgesehen sein. Der Laser ist insbesondere als Halbleiterlaser realisiert. Die SLD (Superlumineszenzdiode) ist ein Bauelement der Optoelektronik und entspricht vom Aufbau her einer Laserhalbleiterdiode, die keinen Resonator aufweist.

Weiterhin wird vorgeschlagen, dass zwischen der Lichtquelle und der Reflektoreinheit eine Konversionseinheit angeordnet ist. Die Konversionseinheit dient dazu, von der Lichtquelle emittiertes Licht spektral zu wandeln, sodass für die Beleuchtungszwecke geeignetes Licht bereitgestellt wird. Vorzugsweise handelt es sich hierbei um weißes Licht. Ein Konversionsstoff, der bei Konversionseinheiten regelmäßig zum Einsatz kommt, basiert auf Phosphor. Vorzugsweise ist das Konversionselement im Strahlengang zwischen der Lichtquelle und der Reflektoreinheit angeordnet. Die Reflektoreinheit braucht deshalb nicht für die Eigenschaften des von der unmittelbar von der Lichtquelle emittierten Lichts ausgebildet zu sein, sondern kann vielmehr für das von der Konversionseinheit emittierte Licht angepasst ausgebildet sein. Darüber hinaus kann insbesondere bei Lasern, SLD's sowie LED's ein Konversionselement mit geringen Abmessungen ausreichen, um den gewünschten Konversionseffekt realisieren zu können. Durch das erfindungsgemäße Verfahren beziehungsweise die erfindungsgemäße Einrichtung kann darüber hinaus sichergestellt werden, dass die Konversionseinheit bei ausgeschalteter Lichtquelle nicht durch von außen durch die Lichtaustrittsöffnung eintretendes Licht beaufschlagt wird. Gerade Konversionseinheiten können auf derartiges Licht, insbesondere wenn es sich um Sonnenlicht handelt, empfindlich reagieren, beispielsweise wenn der Konversionsstoff mittels Kleben an einem Träger der Konversionseinheit befestigt ist und der Kleber durch das Sonnenlicht einer erhöhten Alterung unterliegt. Durch die Erfindung wird von außen durch die Lichtaustrittsöffnung eindringendes Licht zum Absorber umgelenkt, sodass die Konversionseinheit hiervor geschützt ist.

Weitere Vorteile und Merkmale sind der folgenden Beschreibung eines Ausführungsbeispiels zu entnehmen.

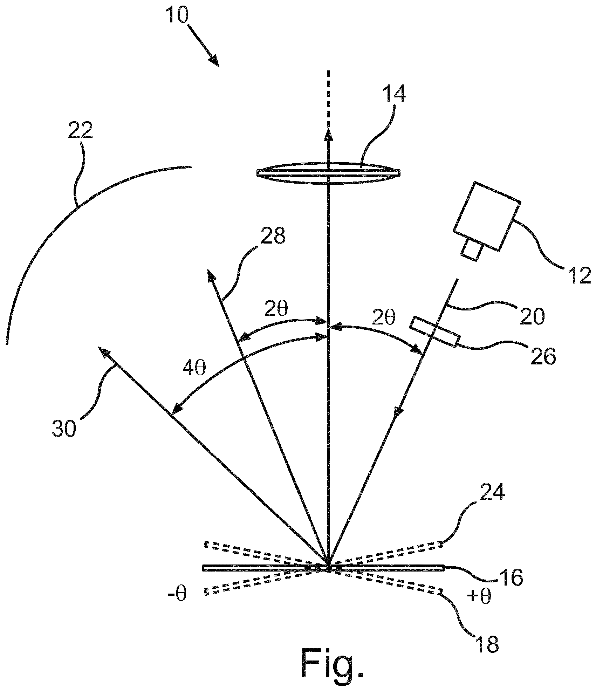

Es zeigt die einzige Figur in einer schematischen Darstellung eine Beleuchtungseinrichtung gemäß der Erfindung.

Die einzige Figur zeigt eine Beleuchtungseinrichtung 10 gemäß der Erfindung, die in einem nicht weiter dargestellten Scheinwerfer eines ebenfalls nicht weiter dargestellten Kraftfahrzeugs angeordnet ist. Die Beleuchtungseinrichtung 10 umfasst eine Lichtquelle 12, die vorliegend als Halbleiterlaser ausgebildet ist. Ferner umfasst die Beleuchtungseinrichtung 10 eine Lichtaustrittsöffnung 14, die vorliegend durch eine Glasscheibe gebildet ist. Zwischen dem Halbleiterlaser 12 und der Glasscheibe 14 ist ein Spiegel 16 als Reflektoreinheit angeordnet, dessen Schwenkposition mittels eines Steuersignals steuerbar ist, um hinsichtlich der Reflexionsposition steuerbar zu sein. Der Spiegel 16 ist ausgebildet, mittels eines Betriebssteuersignals als Steuersignal eine Betriebsposition 18 einzunehmen, in der vom Halbleiterlaser 12 emittiertes Licht 20 derart reflektiert wird, dass es zur Glasscheibe 14 umgelenkt wird.

Zwischen dem Halbleiterlaser 12 und dem Spiegel 16 ist ferner ein Trägerelement mit einem Konversionsstoff, hier ein Phosphorwerkstoff, als Konversionseinheit 20 angeordnet. Die Konversionseinheit 20 dient dazu, das vom Halbleiterlaser 12 emittierte Licht in weißes Licht für Beleuchtungszwecke zu konvertieren. Nicht dargestellt ist, dass der Konversionsstoff mittels einer Kleberschicht auf dem nicht dargestellten Träger befestigt ist. Mittels des Halbleiterlasers 12 wird als emittiertes Licht 20 UV-Licht erzeugt und emittiert, welches mittels der Konversionseinheit 26 in sichtbares Licht konvertiert wird. Infolgedessen ist der Spiegel 16 für die Reflexion von weißem Licht als Konversionslicht ausgebildet.

In der Betriebsposition 18, die durch das Zeichen +Θ dargestellt ist, wird das von der Konversionseinheit 26 emittierte weiße Licht mittels des Spiegels 16 zur Glasscheibe 14 umgelenkt und verlässt dadurch die Beleuchtungseinrichtung 10, um eine gewünschte Beleuchtungsfunktion zu realisieren. Da vorliegend vorgesehen ist, dass die Beleuchtungseinrichtung 10 Bestandteil eines Kraftfahrzeugscheinwerfers ist, ist die Beleuchtung einer Straße vorgesehen.

Erfindungsgemäß umfasst die Beleuchtungseinrichtung 10 ein Absorberelement 22, welches ausgebildet ist, empfangenes Licht zu absorbieren. Vorliegend ist das Absorberelement 22 durch eine schwarze Schicht auf einem Gehäuse der Beleuchtungseinrichtung 10 vorgesehen, die ausgebildet ist, weißes Licht zu absorbieren. Zu diesem Zweck ist der Spiegel 16 ausgebildet, mittels eines Absorbersignals als Steuersignal eine Absorberposition 24 einzunehmen, in der das Licht, welches von der Konversionseinheit 26 emittiert wird, zum Absorberelement 22 umgelenkt wird. Diese Stellung ist in der Figur ferner durch -Θ dargestellt. Die Absorberposition 24 wird vom Spiegel 16 eingenommen, wenn der Halbleiterlaser 12 ausgeschaltet ist.

Dadurch wird sichergestellt, dass der Halbleiterlaser 12, insbesondere aber die Konversionseinheit 26 von außen durch die Glasscheibe 14 hindurch nicht sichtbar sind. Durch die Absorberstellung 24 des Spiegels 16 wird nämlich durch die Glasscheibe 14 von außen eintretendes Licht in Richtung Absorberelement 22 umgelenkt. Ein solches Licht ist in der Figur durch einen Lichtstrahl 28 gekennzeichnet. Entsprechend würde, wenn der Halbleiterlaser 12 noch eingeschaltet wäre, Licht gemäß dem Lichtstrahl 28 zum Absorberelement 22 umgelenkt. In jedem Fall ist sichergestellt, dass die optische Verbindung zwischen dem Halbleiterlaser 12 beziehungsweise der Konversionseinheit 26 und der Glasscheibe 14 unterbrochen ist. Dadurch kann die Konversionseinheit 26 vor durch die Glasscheibe von außen eintretendes Licht zuverlässig geschützt werden, sodass insbesondere eine Alterung der Klebeverbindung zwischen dem Phosphor und der Trägereinheit reduziert werden kann.

Zugleich wird erreicht, dass die Beleuchtungseinrichtung 10 von außen betrachtet durch die Glasscheibe 14 hindurch nicht mehr gelblich leuchtet, weil durch den Spiegel 16 in der Absorberposition 24 sichergestellt ist, dass die optische Verbindung unterbrochen ist. Von außen eintretendes Licht wird in der Absorberposition 24 des Spiegels 16 ebenfalls zum Absorberelement 22 umgelenkt. Dies ist in der Figur durch den Lichtstrahl 30 dargestellt.

Das Ausführungsbeispiel dient lediglich der Erläuterung der Erfindung und ist für diese nicht beschränkend. Natürlich können Funktionen, insbesondere in Bezug auf die Reflektoreinheit sowie deren Antrieb variieren, ohne den Gedanken der Erfindung zu verlassen. Darüber hinaus ist die Erfindung nicht nur für die Anwendung bei Fahrzeugen beschränkt, sondern sie kann natürlich für beliebige Beleuchtungseinrichtungen, beispielsweise auch Gebäudebeleuchtungseinrichtungen oder dergleichen benutzt werden.

Schließlich ist anzumerken, dass die für die erfindungsgemäße Einrichtung beschriebenen Vorteile und Merkmale sowie Ausführungsformen gleichermaßen für das entsprechende Verfahren gelten und umgekehrt. Insbesondere können für Vorrichtungsmerkmale entsprechende Verfahrensmerkmale und umgekehrt vorgesehen sein.

## Patentansprüche

1. Beleuchtungseinrichtung (10) mit einer Lichtquelle (12), einer Lichtaustrittsöffnung (14), die eine Öffnung ist, die durch ein Gehäuse gebildet ist, sowie einer zwischen der Lichtquelle (12) und der Lichtaustrittsöffnung (14) angeordneten, mittels eines Steuersignals hinsichtlich ihrer Reflexionsposition steuerbaren Reflektoreinheit (16) sowie einem Absorberelement (22), welches ausgebildet ist, empfangenes Licht zu absorbieren, wobei die Reflektoreinheit (16) ausgebildet ist, mittels eines Betriebssteuersignals eine Betriebsposition (18) einzunehmen, in der von der Lichtquelle (12) emittiertes Licht (20) zur Lichtaustrittsöffnung (14) umlenkbar ist, wobei die Reflektoreinheit (16) ausgebildet ist, im ausgeschalteten Zustand der Beleuchtungseinrichtung (10) mittels eines Absorbersignals eine Absorberposition (24) einzunehmen, in der das von der Lichtquelle (12) emittierte Licht (20) und/oder von außen durch die Lichtaustrittsöffnung (14) in die Beleuchtungseinrichtung (10) eintretendes Licht zum Absorberelement (22) umlenkbar ist, um zu vermeiden, dass die Lichtquelle (12) bei ausgeschalteter Beleuchtungseinrichtung (10) von außen sichtbar ist, wobei die Reflektoreinheit (16) ausgebildet ist, die Absorberposition bei deaktivierter Lichtquelle (12) automatisch einzunehmen, **dadurch gekennzeichnet, dass** das Absorberelement (22) ausschließlich einen Absorberbereich des Gehäuses der Beleuchtungseinrichtung (10), der geschwärzt ist, aufweist.

2. Beleuchtungseinrichtung nach Anspruch 1, **dadurch gekennzeichnet, dass** die Reflektoreinheit (16) ausgebildet ist, mittels einer Antriebseinheit in die Absorberposition verfahren zu werden.

3. Beleuchtungseinrichtung nach Anspruch 1 oder 2, **dadurch gekennzeichnet, dass** die Reflektoreinheit (16) zum Einnehmen der Absorberposition elastisch vorgespannt ist.

4. Beleuchtungseinrichtung nach einem der Ansprüche 1 bis 3, **dadurch gekennzeichnet, dass** die Reflektoreinheit (16) eine Mehrzahl von einstellbaren Reflektorelementen aufweist, die mittels des Steuersignals individuell einstellbar sind.

5. Beleuchtungseinrichtung nach einem der Ansprüche 1 bis 4, **dadurch gekennzeichnet, dass** die Lichtquelle (12) einen Laser, eine SLD oder eine Leuchtdiode aufweist.

6. Beleuchtungseinrichtung nach einem der Ansprüche 1 bis 5, **dadurch gekennzeichnet, dass** zwischen der Lichtquelle (12) und der Reflektoreinheit (16) eine Konversionseinheit (26) angeordnet ist.

7. Scheinwerfer für ein Kraftfahrzeug, mit einem Scheinwerfergehäuse sowie einer elektrischen Anschlusseinheit, **gekennzeichnet durch** eine Beleuchtungseinrichtung (10) nach einem der vorhergehenden Ansprüche.

8. Kraftfahrzeug, **gekennzeichnet durch** einen Scheinwerfer nach Anspruch 7.

9. Verfahren zum Betreiben einer Beleuchtungseinrichtung (10) mit einer Lichtquelle (12), einer Lichtaustrittsöffnung (14), die eine Öffnung ist, die durch ein Gehäuse gebildet ist, sowie einer zwischen der Lichtquelle (12) und der Lichtaustrittsöffnung (14) angeordneten einstellbaren Reflektoreinheit (16) sowie einem Absorberelement (22), welches empfangenes Licht absorbiert, wobei die Reflektoreinheit (16) mittels eines Steuersignals hinsichtlich ihrer Reflexionsstellung gesteuert wird, wobei die Reflektoreinheit (16) mittels eines Betriebssteuersignals eine Betriebsposition (18) einnimmt, in der von der Lichtquelle (12) emittiertes Licht (20) zur Lichtaustrittsöffnung (14) umgelenkt wird, wobei die Reflektoreinheit (16) im ausgeschalteten Zustand der Beleuchtungseinrichtung (10) mittels eines Absorbersignals eine Absorberposition (24) einnimmt, in der das von der Lichtquelle (12) emittierte Licht (20) und/oder von außen durch die Lichtaustrittsöffnung (14) in die Beleuchtungseinrichtung (10) eintretendes Licht zum Absorberelement (22) umgelenkt wird, um zu vermeiden, dass die Lichtquelle (12) bei ausgeschalteter Beleuchtungseinrichtung (10) von außen sichtbar ist, wobei die Absorberposition bei deaktivierter Lichtquelle (12) durch die Reflektoreinheit (16) automatisch eingenommen wird, **dadurch gekennzeichnet, dass** das Absorberelement (22) ausschließlich einen Absorberbereich des Gehäuses der Beleuchtungseinrichtung (10), der geschwärzt ist, aufweist.

## Claims

1. Illumination device (10) having a light source (12), a light exit aperture (14) which is an aperture which is formed by a housing, as well as a reflector unit (16) arranged between the light source (12) and the light exit aperture (14) which can be controlled with regard to its reflection position by means of a control signal, as well as an absorber element (22) which is configured to absorb received light, wherein the reflector unit (16) is configured to take, by means of an operating control signal, an operating position (18), in which light (20) emitted by the light source (12) can be diverted to the light exit aperture (14), wherein the reflector unit (16) is configured, in the switched-off state of the illumination device (10), to take, by means of an absorber signal, an absorber position (24), in which the light (20) emitted by the light source (12) and/or light entering from outside through the light exit aperture (14) into the illumination device (10) can be deflected to the absorber element (22), in order to avoid the light source (12) being visible from outside when the illumination device (10) is switched off, wherein the reflector unit (16) is configured to take automatically the absorber position when the light source (12) is deactivated,
**characterised in that** the absorber element (22) has only one absorber region of the housing of the illumination device (10), which is blackened.

2. Illumination device according to claim 1, **characterised in that** the reflector unit (16) is configured to be moved into the absorber position by means of a drive unit.

3. Illumination device according to claim 1 or 2, **characterised in that** the reflector unit (16) is elastically biased to take the absorber position.

4. Illumination device according to any of claims 1 to 3, **characterised in that** the reflector unit (16) has a plurality of adjustable reflector elements which can be adjusted individually by means of the control signal.

5. Illumination device according to any of claims 1 to 4, **characterised in that** the light source (12) has a laser, an SLD or a light diode.

6. Illumination device according to any of claims 1 to 5, **characterised in that** a conversion unit (26) is arranged between the light source (12) and the reflector unit (16).

7. Headlamp for a motor vehicle having a headlamp housing and an electrical terminal unit, **characterised by** an illumination device (10) according to any of the preceding claims.

8. Motor vehicle **characterised by** a headlamp according to claim 7.

9. Method for operating an illumination device (10) having a light source (12), a light exit aperture (14), which is an aperture which is formed by a housing, as well as an adjustable reflector unit (16) arranged between the light source (12) and the light exit aperture (14), as well as an absorber element (22), which absorbs received light, wherein the reflector unit (16) is controlled by means of a control signal with regard to its reflection position, wherein the reflector unit (16) takes by means of an operating control signal an operating position (18), in which light (20) emitted by the light source (12) can be diverted to the light exit aperture (14), wherein in the switched-off state of the illumination device (10) the reflector unit (16) takes, by means of an absorber signal, an absorber position (24), in which the light (20) emitted by the light source (12) and/or light entering from outside through the light exit aperture (14) into the illumination device (10) is deflected to the absorber element (22), in order to avoid the light source (12) being visible from outside when the illumination device (10) is switched off, wherein the absorber position is taken automatically by the reflector unit (16) when the light source (12) is deactivated,
**characterised in that** the absorber element (22) has only one absorber region of the housing of the illumination device (10), which is blackened.

## Revendications

1. Dispositif d'éclairage (10) avec une source de lumière (12), une ouverture de sortie de lumière (14) qui est une ouverture qui est formée à travers un boîtier, ainsi qu'une unité de réflecteur (16) agencée entre la source de lumière (12) et l'ouverture de sortie de lumière (14), commandable au moyen d'un signal de commande en ce qui concerne sa position de réflexion ainsi qu'un élément absorbeur (22), lequel est réalisé afin d'absorber de la lumière reçue, dans lequel l'unité de réflecteur (16) est réalisée afin d'occuper au moyen d'un signal de commande de fonctionnement une position de fonctionnement (18), dans laquelle de la lumière (20) émise par la source de lumière (12) peut être déviée par rapport à l'ouverture de sortie de lumière (14), dans lequel l'unité de réflecteur (16) est réalisée afin d'occuper dans l'état désactivé du dispositif d'éclairage (10) au moyen d'un signal d'absorbeur une position d'absorption (24), dans laquelle la lumière (20) émise par la source de lumière (12) et/ou de la lumière entrant de l'extérieur par l'ouverture de sortie de lumière (14) dans le dispositif d'éclairage (10) peut être déviée par rapport à l'élément absorbeur (22) afin d'éviter que la source de lumière (12) puisse être vue de l'extérieur en cas de dispositif d'éclairage (10) désactivé, dans lequel l'unité de réflecteur (16) est réalisée afin d'occuper automatiquement la position d'absorption en cas de source de lumière (12) désactivée,
**caractérisé en ce que** l'élément absorbeur (22) présente exclusivement une zone d'absorption du boîtier du dispositif d'éclairage (10) qui est noircie.

2. Dispositif d'éclairage selon la revendication 1, **caractérisé en ce que** l'unité de réflecteur (16) est réalisée afin d'être déplacée au moyen d'une unité d'entraînement dans la position d'absorption.

3. Dispositif d'éclairage selon la revendication 1 ou 2, **caractérisé en ce que** l'unité de réflecteur (16) est précontrainte de manière élastique pour l'occupation de la position d'absorption.

4. Dispositif d'éclairage selon l'une quelconque des revendications 1 à 3, **caractérisé en ce que** l'unité de réflecteur (16) présente une pluralité d'éléments de réflecteur réglables qui sont réglables individuellement au moyen du signal de commande.

5. Dispositif d'éclairage selon l'une quelconque des revendications 1 à 4, **caractérisé en ce que** la source de lumière (12) présente un laser, un SLD ou une diode électroluminescente.

6. Dispositif d'éclairage selon l'une quelconque des revendications 1 à 5, **caractérisé en ce qu'**une unité de conversion (26) est agencée entre la source de lumière (12) et l'unité de réflecteur (16).

7. Phare pour un véhicule automobile, avec un boîtier de phare ainsi qu'une unité de raccordement électrique, **caractérisé par** un dispositif d'éclairage (10) selon l'une quelconque des revendications précédentes.

8. Véhicule automobile, **caractérisé par** un phare selon la revendication 7.

9. Procédé de fonctionnement d'un dispositif d'éclairage (10) avec une source de lumière (12), une ouverture de sortie de lumière (14) qui est une ouverture qui est formée à travers un boîtier, ainsi qu'une unité de réflecteur (16) réglable agencée entre la source de lumière (12) et l'ouverture de sortie de lumière (14) ainsi qu'un élément absorbeur (22), lequel absorbe de la lumière reçue, dans lequel l'unité de réflecteur (16) est commandée au moyen d'un signal de commande en ce qui concerne sa position de réflexion, dans lequel l'unité de réflecteur (16) occupe au moyen d'un signal de commande de fonctionnement une position de fonctionnement (18), dans laquelle de la lumière (20) émise par la source de lumière (12) est déviée par rapport à l'ouverture de sortie de lumière (14), dans lequel l'unité de réflecteur (16) occupe dans l'état désactivé du dispositif d'éclairage (10) au moyen d'un signal d'absorbeur une position d'absorption (24), dans laquelle la lumière (20) émise par la source de lumière (12) et/ou la lumière entrant de l'extérieur par l'ouverture de sortie de lumière (14) dans le dispositif d'éclairage (10) est déviée par rapport à l'élément absorbeur (22) afin d'éviter que la source de lumière (12) puisse être vue de l'extérieur en cas de dispositif d'éclairage (10) désactivé, dans lequel la position d'absorption est automatiquement occupée en cas de source de lumière (12) désactivée par l'unité de réflecteur (16), **caractérisé en ce que**
l'élément absorbeur (22) présente exclusivement une zone d'absorption du boîtier du dispositif d'éclairage (10) qui est noircie.
